# EUROPEAN PATENT APPLICATION

(11) **EP 4 672 361 A1**
(43) Date of publication of application: **31.12.2025**
(21) Application number: 25176660.6
(22) Date of filing: 15.05.2025
(51) Int. Cl.: H01M 4/136, H01M 4/36, H01M 4/58, H01M 4/62, H01M 10/054, H01M 4/02

(54) **POSITIVE ELECTRODE MATERIAL AND PREPARATION METHOD THEREFOR, POSITIVE ELECTRODE, AND BATTERY**

(30) Priority: 24.06.2024 CN 202410823770
(71) Applicant: Xiamen Hithium Energy Storage Technology Co., Ltd., Xiamen, Fujian 361100 (CN)
(72) Inventor: WANG, Yugang, Xiamen, 361100 (CN); SHEN, Liuxue, Xiamen, 361100 (CN); CHEN, Pengwei, Xiamen, 361100 (CN); WANG, Wei, Xiamen, 361100 (CN); WANG, Shiwen, Xiamen, 361100 (CN)
(74) Representative: Viering, Jentschura & Partner mbB Patent- und Rechtsanwälte

(57) **Abstract**

The present disclosure relates to a positive electrode material and a preparation method therefor, a positive electrode, and a battery. The positive electrode material includes an iron-based phosphate material. The iron-based phosphate material includes a first active material and a second active material. A chemical formula of the first active material is Na₄Fe₃(PO₄)₂P₂O₇. A chemical formula of the second active material is Na₂FeP₂O₇. A mass fraction of the first active material in the iron-based phosphate material is *a1.* A mass fraction of the second active material in the iron-based phosphate material is *a2. a1* and *a2* satisfy: 0 *< a2*/*a1* ≤ 0.2.

## Description

### TECHNICAL FIELD

This disclosure relates to the field of energy-storage technology, and in particular, to a positive electrode material and a preparation method therefor, a positive electrode, and a battery.

### BACKGROUND

With the continuous development of energy storage technology, sodium-ion batteries have attracted much attention due to their high stability and safety. As an iron-based phosphate polyanionic material, Na₄Fe₃(PO₄)₂P₂O₇ (NFPP) has three-dimensional sodium-ion diffusion channels and relatively high theoretical capacity per gram, but the discharge capacity per gram of NFPP at low voltage is low, so that when NFPP is used as a positive electrode material and is applied to a battery, the energy density of the battery is reduced.

### SUMMARY

In view of this, the present disclosure provides a positive electrode material and a preparation method therefor, a positive electrode, and a battery. The positive electrode material has a relatively high discharge capacity per gram.

The present disclosure relates to a positive electrode material. The positive electrode material includes an iron-based phosphate material. The iron-based phosphate material includes a first active material and a second active material. A chemical formula of the first active material is Na₄Fe₃(PO₄)₂P₂O₇. A chemical formula of the second active material is Na₂FeP₂O₇. A mass fraction of the first active material in the iron-based phosphate material is *a1.* A mass fraction of the second active material in the iron-based phosphate material is *a2. a1* and *a2* satisfy: 0 *< a2*/*a1* ≤ 0.2.

Further, the mass fraction *a1* of the first active material in the iron-based phosphate material satisfies: 83% ≤ *a1* < 100%. The mass fraction *a2* of the second active material in the iron-based phosphate material satisfies: 0 *< a2* ≤ 15%.

Further, the positive electrode material includes multiple positive electrode particles. Each of the multiple positive electrode particles includes a coating layer and a core. The core is made of the iron-based phosphate material. The coating layer is coated around a surface of the core. A median particle size *D50* of the positive electrode material satisfies: 2 µm ≤ *D50* ≤ 5 µm.

Further, a mass fraction *a3* of the coating layer in each of the multiple positive electrode particles satisfies: 1% ≤ *a3* ≤ 5%.

Further, the iron-based phosphate material further includes a third active material. A chemical formula of the third active material is NaFePO₄.

The present disclosure further provides a preparation method for the positive electrode material provided in the present disclosure. The preparation method includes the following. A sodium source, an iron source, a phosphorus source, and a carbon source are provided. The slurry is obtained by mixing sodium source, the iron source, the phosphorus source, and the carbon source. The slurry is sand milled and spray dried to obtain first intermediate particles. Staged sintering is performed to obtain the positive electrode material. The positive electrode material includes multiple positive electrode particles. Each of the multiple positive electrode particles includes a coating layer and a core. The core is made of the iron-based phosphate material. The coating layer is coated around a surface of the core. The carbon source is carbonized to form the coating layer. The sodium source, the iron source, and the phosphorus source form the core made of the iron-based phosphate. Performing the staged sintering includes the following. First staged sintering is performed on the first intermediate particles at a first temperature to form second intermediate particles. The carbon source is carbonized to form the coating layer. The sodium source, the iron source, and the phosphorus source form the first active material. Second staged sintering is performed on the second intermediate particles at a second temperature to form the positive electrode material. The carbon source is further carbonized. The sodium source, the iron source, and the phosphorus source form the second intermediate particles, part of the second intermediate particles are further decomposed into the second active material at the second temperature. The second temperature is higher than the first temperature.

Further, the first temperature *T1* satisfies: 450 °C ≤ *T1* ≤ 550 °C. The second temperature *T2* satisfies: 590 °C ≤ *T2* ≤ 650 °C.

Further, a period during which the first staged sintering is performed on the first intermediate particles is *t1*, and *t1* satisfies: 6 h ≤ *t1* ≤ 15 h. A period during which the second staged sintering is performed on the second intermediate particles is *t2,* and *t2* satisfies: 1 h *≤ t2* ≤ 4 h.

Further, providing the sodium source, the iron source, the phosphorus source, and the carbon source, and the slurry is obtained by mixing the sodium source, the iron source, the phosphorus source, and the carbon source, includes the following. A molar ratio α of a sodium element in the sodium source to an iron element in the iron source satisfies: 1.33 ≤ α ≤ 1.43. A molar ratio *β* of the iron element in the iron source to a phosphorus element in the phosphorus source satisfies: 0.68 ≤ *β* ≤ 0. 75.

Further, sand milling and spray drying the slurry to obtain the first intermediate particles includes the following. The slurry is sand milled to obtain a refined slurry. The refined slurry includes precursor particles. A particle size *D* of each of the precursor particles satisfies: *D* < 900 nm. The refined slurry is spray dried to obtain the first intermediate particles.

The present disclosure further provides a positive electrode. The positive electrode includes a positive current collector and a positive electrode material layer. The positive electrode material layer is disposed on a surface of the positive current collector. The positive electrode material layer includes the positive electrode material provided in the present disclosure, or the positive electrode material prepared by the preparation method for the positive electrode material provided in the present disclosure.

The present disclosure further provides a battery. The battery includes an electrolytic solution, a negative electrode, a separator, and the positive electrode provided in the present disclosure. The negative electrode is at least partially immersed in the electrolytic solution. The separator is positioned at one side of the negative electrode, and is at least partially immersed in the electrolytic solution. The positive electrode is disposed at one side of the separator positioned facing away from the negative electrode, and is at least partially immersed in the electrolytic solution.

In the present disclosure, the positive electrode material includes the iron-based phosphate material, the iron-based phosphate material includes the first active material and the second active material, and the mass fraction of the first active material is much larger than the mass fraction of the second active material, so that the iron-based phosphate material is obtained by doping part of the second active material into the first active material. In the positive electrode material provided in the present disclosure, the first active material has a relatively high theoretical capacity per gram and a relatively large mass fraction, so that when the positive electrode material is applied to a positive electrode and assembled into the battery, the battery has a relatively high energy density. Further, the second active material is mixed with the first active material to improve the discharge capacity per gram of the positive electrode material in a low voltage range, and the second active material makes up for the defect of low discharge capacity per gram of the first active material at low voltage, so that when the positive electrode material is applied to the positive electrode and assembled into the battery, the negative electrode has a relatively high discharge capacity per gram in a full voltage range, and the battery has a relatively high energy density. When the mass fraction *a1* of the first active material and the mass fraction *a2* of the second active material satisfy: 0 *< a2*/*a1* ≤ 0. 2, the ratio of the mass fraction of the first active material to the mass fraction of the second active material is within a reasonable range, so that the second active material cannot only make up for the defect of insufficient discharge capacity per gram of the first active material at low voltage, but also maintain the discharge capacity per gram of the positive electrode material at a relatively high level in the full operating voltage range of the battery. Therefore, the battery has a relatively high energy density when the positive electrode material is applied to the positive electrode and assembled into the battery. When *a1*/*a2* is too large, there is too much first active material in the iron-based phosphate material, that is, there is too little second active material in the iron-based phosphate material, so that it is difficult for the second active material to make up for the deficiency of low discharge capacity per gram of the first active material at low voltage. As a result, when the positive electrode material is applied to the positive electrode and assembled into the battery, the energy releasable by the battery at low voltage is small, so that the energy density of the battery is small. In addition, during the charge and discharge cycle of the battery, the discharge capacity per gram of the positive electrode material at low voltage is low, which limits the intercalation and deintercalation of active ions in the battery. As a result, the structure of the positive electrode material changes, which in turn affects the structural stability of the positive electrode, thereby shortening the cycle life of the battery. When *a1*/*a2* is too small, there is too little first active material in the iron-based phosphate material, that is, there is too much second active material in the iron-based phosphate material. Although the addition of the second active material can increase the discharge capacity per gram of the positive electrode material at low voltage, excessive addition of the second active material reduces the discharge capacity per gram of the positive electrode material in the full operating voltage range of the battery, so that the energy density of the battery is too small.

### BRIEF DESCRIPTION OF THE DRAWINGS

In order to explain technical solutions in embodiments of the present disclosure more clearly, the following will give a brief introduction to the accompanying drawings required for describing the implementations. Apparently, the accompanying drawings in the following description illustrate some implementations of the present disclosure. For those of ordinary skill in the art, other accompanying drawings can be obtained according to these accompanying drawings without creative efforts.
FIG. 1 is a schematic structural diagram of a battery in an embodiment of the present disclosure.
FIG. 2 is a schematic structural diagram of a positive electrode in an embodiment of the present disclosure.
FIG. 3 is a schematic flow diagram of a preparation method for a positive electrode material in an embodiment of the present disclosure.
FIG. 4 is a schematic flow diagram of a preparation method for a positive electrode material in another embodiment in the present disclosure.
FIG. 5 is a schematic flow diagram of a preparation method for a positive electrode material in yet another embodiment in the present disclosure.
FIG. 6 is an X-ray diffraction (XRD) spectrum in an embodiment of the present disclosure.
FIG. 7 is an XRD spectrum in another embodiment of the present disclosure.
FIG. 8 is a microscope spectrum in an embodiment of the present disclosure.
FIG. 9 is a microscope spectrum in another embodiment of the present disclosure.
FIG. 10 is a diagram of curves of discharge capacity per gram of embodiment battery 5 and comparative battery 1 discharged from 3.5 V to 1.5 V.

Description of reference signs of the accompanying drawings: 100 - positive electrode material, 110 - positive electrode particle, 120 - core, 130 - coating layer, 200 - positive electrode, 210 - positive current collector, 220 - positive electrode material layer, 300 - battery, 310 - electrolytic solution, 320 - negative electrode, 330 - separator.

### DETAILED DESCRIPTION

The following will clearly and completely describe technical solutions of embodiments of the present disclosure with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it may alternatively include other steps or units that are not listed; alternatively, other steps or units inherent to the process, method, product, or device may be included either.

The term "embodiment" or "implementation" referred to herein means that particular features, structures, or properties described in conjunction with embodiments or implementations may be defined in at least one embodiment of the present disclosure. The phrase "embodiment" or "implementation" appearing in various places in the specification does not necessarily refer to the same embodiment or an independent or alternative embodiment that is mutually exclusive with other embodiments. Those skilled in the art will understand expressly and implicitly that an embodiment described in the present disclosure may be combined with other embodiments.

With the continuous development of energy storage technology, sodium-ion batteries have attracted much attention due to their high stability and safety. As an iron-based phosphate polyanionic material, Na₄Fe₃(PO₄)₂P₂O₇ (NFPP) has three-dimensional sodium-ion diffusion channels and relatively high theoretical capacity per gram, but the discharge capacity per gram of NFPP at low voltage is low, so that when NFPP is used as a positive electrode material and is applied to a battery, the energy density of the battery is reduced.

Our inventors have found that the NFPP has a relatively high theoretical capacity per gram, but has low discharge capacity per gram at low voltage, which may be that in the operating voltage range (e.g., 1.5 V to 4.2 V) of the battery, the NFPP has a relatively high discharge capacity per gram in the overall voltage range of 1.5 V to 4.2 V, but has a low discharge capacity per gram in the voltage range of low voltage (e.g., 1.5 V to 2.6 V).

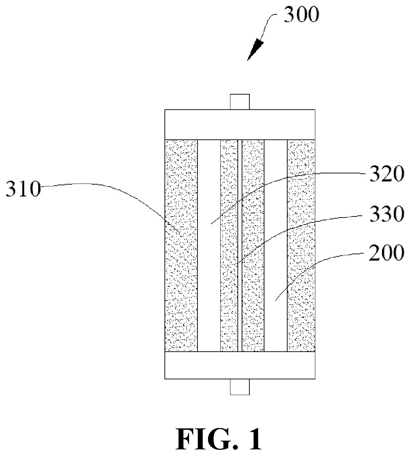

Referring to FIG. 1, the present disclosure provides a battery 300. The battery 300 includes an electrolytic solution 310, a negative electrode 320, a separator 330, and a positive electrode 200 provided in the present disclosure. The negative electrode 320 is at least partially immersed in the electrolytic solution 310. The separator 330 is positioned at one side of the negative electrode 320 and is at least partially immersed in the electrolytic solution 310. The positive electrode 200 is disposed at one side of the separator 330 positioned facing away from the positive electrode 200 and is at least partially immersed in the electrolytic solution 310.

It can be understood that the positive electrode 200, the separator 330, and the negative electrode 320 are laminated in sequence.

In this embodiment, the battery 300 includes the positive electrode 200 provided in the present disclosure. A positive electrode material layer 220 of the positive electrode 200 includes a positive electrode material 100 provided in the present disclosure. The positive electrode material 100 includes a first active material and a second active material. The first active material has a relatively high theoretical capacity per gram and a relatively large mass fraction, so that when the positive electrode material 100 is applied to the positive electrode 200 and assembled into the battery 300, the battery 300 has a relatively high energy density. Further, the second active material is mixed with the first active material to improve the discharge capacity per gram of the positive electrode material 100 in a low voltage range, and the second active material makes up for the defect of the low discharge capacity per gram of the first active material at a low voltage, so that when the positive electrode material 100 is applied to the positive electrode 200 and assembled into the battery 300, the positive electrode 200 has a relatively high discharge capacity per gram in a full voltage range, and the battery 300 has a relatively high energy density.

Optionally, the battery 300 may be one of a cylindrical battery, a prismatic battery, a pouch battery, and the like.

Optionally, the battery 300 may be a sodium-ion battery.

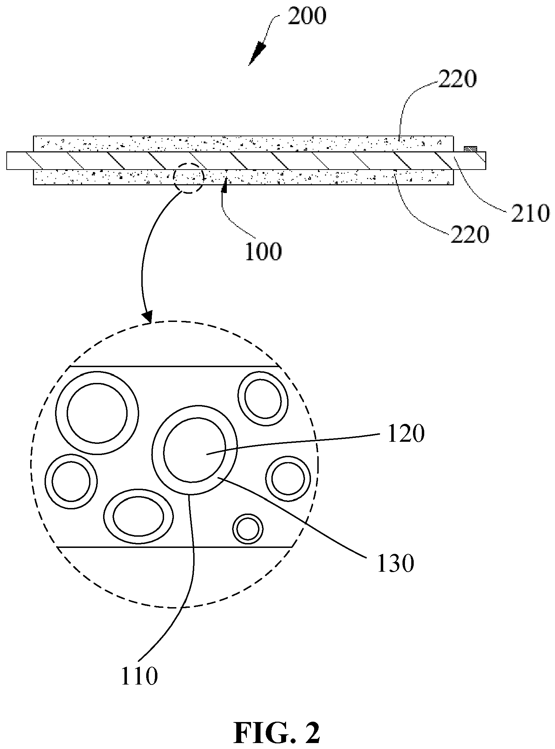

Referring to FIG. 2, the present disclosure provides a positive electrode 200. The positive electrode 200 includes a positive current collector 210 and a positive electrode material layer 220. The positive electrode material layer 220 is disposed on a surface of the positive current collector 210. The positive electrode material layer 220 includes the positive electrode material 100 provided in the present disclosure or the positive electrode material 100 prepared by the preparation method for the positive electrode material 100 provided in the present disclosure.

Optionally, in some embodiments, the positive electrode material layer 220 is disposed on one surface of the positive current collector 210. In other embodiments, the positive electrode material layer 220 is disposed on two surfaces of the positive current collector 210 positioned facing away from each other.

In this embodiment, the positive electrode material layer 220 includes the positive electrode material 100 provided in the present disclosure, or the positive electrode material 100 prepared by the preparation method for the positive electrode material provided in the present disclosure. The positive electrode material 100 includes a first active material and a second active material. The first active material has a relatively high theoretical capacity per gram and a relatively large mass fraction, so that when the positive electrode material 100 is applied to the positive electrode 200 and assembled into the battery 300, the battery 300 has a relatively high energy density. Further, the second active material is mixed with the first active material to improve the discharge capacity per gram of the positive electrode material 100 in a low voltage range, and the second active material makes up for the defect of the low discharge capacity per gram of the first active material at low voltage, so that when the positive electrode material 100 is applied to the positive electrode 200 and assembled into the battery 300, the positive electrode 200 has a relatively high discharge capacity per gram in a full voltage range, and the battery 300 has a relatively high energy density.

Optionally, the positive electrode material layer 220 further includes a conductive agent and a binder. The conductive agent is configured to improve the conductivity of the positive electrode material layer 220. The binder is configured to bond the positive electrode material 100.

Optionally, the conductive agent includes at least one or more members selected from the group consisting of acetylene black, conductive carbon black, carbon nanotubes, carbon fibers, graphene, and the like.

Optionally, the binder is selected from polyvinylidene fluoride (PVDF).

The present disclosure provides a positive electrode material 100. The positive electrode material 100 includes an iron-based phosphate material. The iron-based phosphate material includes a first active material and a second active material. A chemical formula of the first active material is Na₄Fe₃(PO₄)₂P₂O₇. A chemical formula of the second active material is Na₂FeP₂O₇. A mass fraction of the first active material in the iron-based phosphate material is *a1.* A mass fraction of the second active material in the iron-based phosphate material is *a2. a1* and *a2* satisfy: 0 *< a2*/*a1* ≤ 0.2.

It can be understood that, the chemical formula of the first active material is Na₄Fe₃(PO₄)₂P₂O₇ (NFPP). The first active material has a relatively high theoretical capacity per gram, but has low capacity per gram at low voltage.

It can be understood that, the chemical formula of the second active material is Na₂FeP₂O₇ (NFPO). The theoretical capacity per gram of the second active material is lower than the theoretical capacity per gram of the first active material, but the capacity per gram of the second active material at low voltage is higher than the capacity per gram of the first active material at low voltage.

It can be understood that, when the positive electrode material 100 is applied to the positive electrode 200 and assembled into the battery 300, the amount of charge provided by the first active material per unit mass in the full operating voltage range of the battery 300 is the theoretical capacity per gram of the first active material, and the amount of charge provided by the second active material per unit mass in the full operating voltage range of the battery 300 is the theoretical capacity per gram of the second active material.

It can be understood that, in the terminology of the present disclosure, the full operating voltage range of the battery 300 is an interval range of the minimum operating voltage of the battery 300 and the maximum operating voltage of the battery 300 during the charge and discharge.

In the terminology of the present disclosure, the low voltage refers to a range in which the voltage within the full operating voltage range of the battery 300 is relatively low with respect to the full operating voltage range of the battery 300, and may not be understood as a limitation to the low voltage range. For example, if the maximum operating voltage of the battery 300 is 4.2 V and the minimum operating voltage of the battery 300 is 1.5 V, the full operating voltage range of the battery 300 is from 1.5 V to 4.2 V, and the low voltage range of the battery 300 may be, but is not limited to, from 1.5 V to 2.6 V, from 1.5 V to 2.5 V, etc.

It can be understood that, the mass fraction *a1* of the first active material may be a ratio of the mass of the first active material to the mass of the iron-based phosphate material. The mass fraction *a2* of the second active material may be a ratio of the mass of the second active material to the mass of the iron-based phosphate material.

It can be understood that, the mass fraction of the first active material in the iron-based phosphate material is larger than the mass fraction of the second active material in the iron-based phosphate material.

Specifically, *a2*/*a1* may be, but is not limited to, 0.01, 0.02, 0.03, 0.05, 0.06, 0.07, 0.08, 0.09, 0.1, 0.11, 0.13, 0.14, 0.15, 0.16, 0.17, 0.18, 0.19, 0.2, etc.

In this embodiment, the positive electrode material 100 includes the iron-based phosphate material, the iron-based phosphate material includes the first active material and the second active material, and the mass fraction of the first active material is much larger than the mass fraction of the second active material, so that the iron-based phosphate material is obtained by doping part of the second active material into the first active material. In the positive electrode material 100 provided in this embodiment, the first active material has a relatively high theoretical capacity per gram and a relatively large mass fraction, so that when the positive electrode material 100 is applied to the positive electrode 200 and assembled into the battery 300, the battery 300 has a relatively high energy density. Further, the second active material is mixed with the first active material to improve the discharge capacity per gram of the positive electrode material 100 in a low voltage range, and the second active material makes up for the defect of low discharge capacity per gram of the first active material at low voltage, so that when the positive electrode material 100 is applied to the positive electrode 200 and assembled into the battery 300, the positive electrode 200 has a relatively high discharge capacity per gram in a full voltage range, and the battery 300 has a relatively high energy density. When the mass fraction *a1* of the first active material and the mass fraction *a2* of the second active material satisfy: 0 *< a2*/*a1* ≤ 0. 2, the ratio of the mass fraction of the first active material to the mass fraction of the second active material is within a reasonable range, so that the second active material cannot only make up for the defect of insufficient discharge capacity per gram of the first active material at low voltage, but also maintain the discharge capacity per gram of the positive electrode material 100 at a relatively high level in the full operating voltage range of the battery 300. Therefore, the battery 300 has a relatively high energy density when the positive electrode material 100 is applied to the positive electrode 200 and assembled into the battery 300. When *a1*/*a2* is too large, there is too much first active material in the iron-based phosphate material, that is, there is too little second active material in the iron-based phosphate material, so that it is difficult for the second active material to make up for the deficiency of low discharge capacity per gram of the first active material at low voltage. As a result, when the positive electrode material 100 is applied to the positive electrode 200 and assembled into the battery 300, the energy releasable by the battery 300 at low voltage is small, so that the energy density of the battery 300 is small. In addition, during the charge and discharge cycle of the battery 300, the discharge capacity per gram of the positive electrode material 100 at low voltage is low, which limits the intercalation and deintercalation of active ions in the battery 300. As a result, the structure of the positive electrode material 100 changes, which in turn affects the structural stability of the positive electrode 200, thereby shortening the cycle life of the battery 300. When *a1*/*a2* is too small, there is too little first active material in the iron-based phosphate material, that is, there is too much second active material in the iron-based phosphate material. Although the addition of the second active material can increase the discharge capacity per gram of the positive electrode material 100 at low voltage, excessive addition of the second active material reduces the discharge capacity per gram of the positive electrode material 100 in the full operating voltage range of the battery 300, so that the energy density of the battery 300 is too small.

In some embodiments, the mass fraction *a1* of the first active material in the iron-based phosphate material satisfies: 83% ≤ *a1* < 100%. The mass fraction *a2* of the second active material in the iron-based phosphate material satisfies: 0 *< a2* ≤ 15%.

Specifically, the mass fraction *a1* of the first active material may be, but is not limited to, 83%, 84%, 85%, 87%, 88%, 89%, 90%, 91%, 93%, 94%, 96%, 97%, 98%, 99%, 99.5%, etc.

Specifically, the mass fraction *a2* of the second active material may be, but is not limited to, 0.5%, 1%, 2%, 3%, 4%, 5%, 7%, 8%, 9%, 10%, 11%, 12%, 12.5%, 13%, 14%, 14.5%, 15%, etc.

In this embodiment, when the mass fraction *a1* of the first active material satisfies: 83% ≤ *a1 <* 100% and the mass fraction *a2* of the second active material satisfies: 0 < *a2* ≤ 15%, in the iron-based phosphate material, the mass fraction of the first active material and the mass fraction of the second active material are both within a reasonable range. Therefore, the second active material cannot only make up for the deficiency of the low discharge capacity per gram of the first active material at low voltage, but also maintain the discharge capacity per gram of the positive electrode material 100 at a high level in the full operating voltage range of the battery 300, so that when the positive electrode material 100 is applied to the positive electrode 200 and assembled into the battery 300, the battery 300 has a relatively high energy density. In addition, the influence on the intercalation and deintercalation of active ions due to the low discharge capacity per gram of the battery 300 at low voltage can be avoided, and the structural change of the positive electrode material 100 can be avoided, so that the battery 300 has a relatively long service life. When the mass fraction of the first active material is too large and the mass fraction of the second active material is too small, the effect of doping the second active material into the first active material to improve the discharge capacity per gram of the positive electrode material 100 at low voltage is relatively poor, so that when the positive electrode material 100 is applied to the positive electrode 200 and assembled into the battery 300, the discharge capacity per gram of the battery 300 at low voltage is relatively low, which reduces the energy density of the battery 300, and limits the intercalation and deintercalation of active ions in the battery 300. As a result, the structure of the positive electrode material 100 changes, which in turns affects the structural stability of the positive electrode 200, thereby shortening the cycle life of the battery 300. When the mass fraction of the second active material is too small and the mass fraction of the second active material is too large, although the second active material can make up for the deficiency of the low discharge capacity per gram of the first active material at low voltage, the theoretical capacity per gram of the second active material is lower than the theoretical capacity per gram of the first active material, so that the discharge capacity per gram of the positive electrode material 100 in the full operating voltage range of the battery 300 is reduced, thereby reducing the energy density of the battery 300.

Referring to FIG. 2, in some embodiments, the positive electrode material 100 includes multiple positive electrode particles 110. Each of the multiple positive electrode particles 100 includes a coating layer 130 and a core 120. The core 120 is made of the iron-based phosphate material. The coating layer 130 is coated around a surface of the core 120. A median particle size *D50* of the positive electrode material 100 satisfies: 2 µm ≤ *D50* ≤ 5 µm.

Specifically, the median particle size *D50* of the positive electrode material 100 may be, but is not limited to, 2 µm, 2.2 µm, 2.5 µm, 2.8 µm, 3 µm, 3.2 µm, 3.3 µm, 3.5 µm, 3.8 µm, 4 µm, 4.2 µm, 4.5 µm, 4.6 µm, 4.7 µm, 4.8 µm, 4.9 µm, 5 µm, etc.

It can be understood that, the median particle size of the positive electrode material 100 is a particle size corresponding to a percentage of the cumulative particle size distribution of the positive electrode particles in the positive electrode material 100 of 50%.

In this embodiment, the positive electrode particle includes the coating layer and the iron-based phosphate material. The coating layer is coated around the surface of the core made of the iron-based phosphate material, and used for improving conductivity of the positive electrode particle. When the median particle size *D50* of the positive electrode material 100 satisfies: 2 µm ≤ *D50* ≤ 5 µm, the median particle size *D50* of the positive electrode material 100 is within a reasonable range. Therefore, when the positive electrode material 100 is applied to the positive electrode 200, on the one hand, it is possible to avoid too small median particle size of the positive electrode material 100 and thus avoid too small compacted density of the positive electrode 200, so that the battery 300 has relatively high energy density when the positive electrode 200 is assembled into the battery 300. On the other hand, it is possible to avoid too large median particle size of the positive electrode material 100 and thus avoid the uneven surface of the positive electrode 200, so that the processing performance of the positive electrode particles applied to the positive electrode 200 is improved, the processing difficulty of the positive electrode particles applied to the positive electrode 200 is reduced, and the battery 300 has relatively good cycle performance when the positive electrode 200 is applied to the battery 300. However, when the median particle size of the positive electrode material 100 is too large, in the process of applying the positive electrode material 100 to the positive electrode 200, there still are relatively large particles protruding when the positive electrode material 100 is coated onto the surface of the positive current collector 210. As a result, the processing difficulty of applying the positive electrode material 100 to the positive electrode 200 is increased, the processing performance of the positive electrode 200 is reduced, and thus when the positive electrode 200 is applied to the battery 300, the internal resistance of the battery 300 is increased and the cycle performance of the battery 300 is reduced. When the median particle size of the positive electrode material 100 is too small, after the positive electrode material 100 is applied to the positive electrode 200, the compacted density of the positive electrode 200 is too low, and thus the energy density of the battery 300 when the positive electrode 200 is assembled into the battery 300 is reduced.

In some embodiments, when the percentage of the cumulative particle size distribution of the positive electrode material reaches 99%, the corresponding particle size *D99* of the positive electrode material satisfies: 10 µm ≤ *D99* ≤ 30 µm.

Specifically, when the percentage of the cumulative particle size distribution of the positive electrode material reaches 99%, the corresponding particle size of the positive electrode material may be, but is not limited to, 10 µm, 12 µm, 13 µm, 15 µm, 16 µm, 17 µm, 18 µm, 20 µm, 21 µm, 23 µm, 24 µm, 25 µm, 26 µm, 27 µm, 28 µm, 29 µm, 30 µm, etc.

It can be understood that, when the median particle size *D50* of the positive electrode material 100 is larger, the particle size *D99* corresponding to the percentage of the cumulative particle size distribution of the positive electrode material of 99% is larger.

In this embodiment, when the particle size *D99* of the positive electrode material corresponding to the percentage of the cumulative particle size distribution of the positive electrode material of 99% satisfies: 10 µm ≤ *D99* ≤ 30 µm, *D99* of the positive electrode material is within a reasonable range. When the positive electrode material 100 is applied to the positive electrode 200, on the one hand, it is possible to avoid too small particle size of the positive electrode particle and thus avoid too small compacted density of the positive electrode 200, so that the battery 300 has a relatively high energy density when the positive electrode 200 is assembled into the battery 300. On the other hand, it is possible to avoid too large median particle size of the positive electrode particle and thus avoid the uneven surface of the positive electrode 200, so that the processing performance of the positive electrode particles applied to the positive electrode 200 is improved, the processing difficulty of the positive electrode particles applied to the positive electrode 200 is reduced, and the battery 300 has relatively good cycle performance when the positive electrode 200 is applied to the battery 300. However, when *D99* of the positive electrode material is too large, in the process of applying the positive electrode material 100 to the positive electrode 200, there still are relatively large particles protruding when the positive electrode material 100 is coated onto the surface of the positive current collector 210. As a result, the processing difficulty of applying the positive electrode material 100 to the positive electrode 200 is increased, the processing performance of the positive electrode 200 is reduced, and thus when the positive electrode 200 is applied to the battery 300, the internal resistance of the battery 300 is increased and the cycle performance of the battery 300 is reduced. When *D99* of the positive electrode material is too small, after the positive electrode material 100 is applied to the positive electrode 200, the compacted density of the positive electrode 200 is too low, and thus the energy density of the battery 300 when the positive electrode 200 is assembled to the battery 300 is reduced.

In some embodiments, a mass fraction *a3* of the coating layer in each of the multiple positive electrode particles satisfies: 1% ≤ *a3* ≤ 5%*.*

Specifically, the mass fraction *a3* of the coating layer may be, but is not limited to, 1%, 1.2%, 1.5%, 1.6%, 1.8%, 2%, 2.2%, 2.4%, 2.5%, 2.6%, 2.7%, 2.9%, 3%, 3.2%, 3.5%, 3.8%, 4%, 4.2%, 4.3%, 4.5%, 4.7%, 4.8%, 4.9%, 5%, etc.

It can be understood that, the mass fraction of the coating layer is a ratio of the mass of the coating layer to the mass of the positive electrode particle.

In this embodiment, when the mass fraction *a3* of the coating layer satisfies: 1% ≤ *a3* ≤ 5%, the mass fraction of the coating layer is within a reasonable range. When the positive electrode particles are applied to the positive electrode 200 and assembled into the battery 300, on the one hand, the discharge capacity per gram of the positive electrode particles in the full voltage range of the battery 300 is maintained at a relatively high level. On the other hand, the coating layer improves the conductivity of the positive electrode particles, so that when the positive electrode particles are applied to the positive electrode 200 and assembled into the battery 300, the battery 300 has a relatively high energy density and a relatively high charge and discharge efficiency. However, when the mass fraction of the coating layer is too large, correspondingly, the mass fraction of the iron-based phosphate material in the positive electrode particle is too small, and the first active material and the second active material in the iron-based phosphate material are too small, so that the content of the active material in the positive electrode particle is reduced. As a result, when the positive electrode particles are applied to the positive electrode 200 and assembled into the battery 300, the capacity of the battery 300 is reduced, and the electrochemical performance of the battery 300 is relatively poor. When the mass fraction of the coating layer is too small, the mass content of the coating layer in the positive electrode particle is too small, so that the conductivity of the positive electrode particles is relatively poor. As a result, when the positive electrode particles are applied to the positive electrode 200 and assembled into the battery 300, the charge and discharge efficiency of the battery 300 is relatively low.

In some embodiments, the iron-based phosphate material further includes a third active material. A chemical formula of the third active material is NaFePO₄ (NFP).

In this embodiment, the iron-based phosphate material further includes the third active material. The chemical formula of the third active material is NaFePO₄. The density of the third active material is larger than the density of the first active material, and when the third active material is mixed with the third active material, the energy density of the positive electrode material 100 can be increased. When the positive electrode material 100 is applied to the positive electrode 200 and assembled into the battery 300, the battery 300 has a relatively high energy density.

Optionally, a mass fraction *a4* of the third active material in the iron-based phosphate material satisfies:0 < *a4* ≤ 2%.

Specifically, the mass fraction *a4* of the third active material may be, but is not limited to, 0.1%, 0.2%, 0.4%, 0.5%, 0.7%, 0.9%, 1%, 1.1%, 1.2%, 1.3%, 1.5%, 1.6%, 1.7%, 1.8%, 1.9%, 2%, etc.

When the mass fraction *a4* of the third active material satisfies: 0 *< a4* ≤ 2%, the mass fraction of the third active material is within a reasonable range, which is conducive to increasing the energy density of the positive electrode material 100.

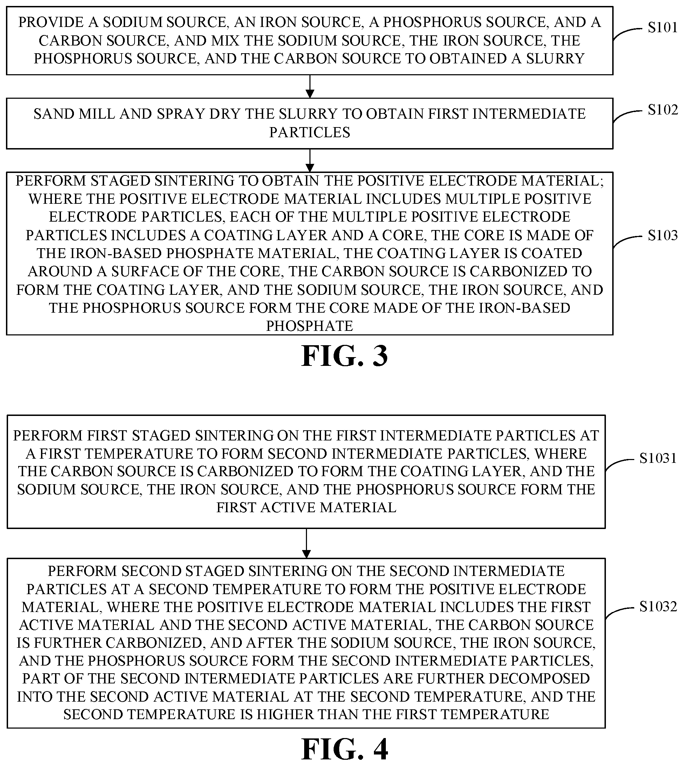

Referring to FIG. 3 and FIG. 4, the present disclosure further provides a preparation method for a positive electrode material 100. The preparation method is used to prepare the positive electrode material 100 provided in the present disclosure. The preparation method includes the following.

S101, a sodium source, an iron source, a phosphorus source, and a carbon source are provided, and a slurry is obtained by mixing the sodium source, the iron source, the phosphorus source, and the carbon source.

Optionally, the sodium source includes at least one member selected from the group consisting of sodium carbonate, sodium dihydrogen phosphate, disodium hydrogen phosphate, sodium pyrophosphate, sodium acetate, sodium hydroxide, and sodium nitrate.

Optionally, the iron source includes at least one member selected from the group consisting of ferric phosphate, ferrous oxalate, ferric nitrate, iron, ferric oxide, and ferroferric oxide.

Optionally, the phosphorus source includes at least one member selected from the group consisting of ammonium dihydrogen phosphate, diammonium hydrogen phosphate, and phosphoric acid.

Optionally, the carbon source includes at least one member selected from the group consisting of glucose, citric acid, ascorbic acid, polyethylene glycol, acetylene black, graphene, carbon nanotubes, sucrose, and starch.

It can be understood that, the sodium source, the iron source, the phosphorus source, and the carbon source are dispersed in a solvent and uniformly mixed. In some embodiments, the solvent is water.

S102, the slurry is sand milled and spray dried to obtain first intermediate particles.

It can be understood that, by sand milling the slurry, the slurry obtained by mixing the sodium source, the iron source, the phosphorus source, and the carbon source can be further mixed, so as to improve the uniformity and stability of the mixture in the slurry and improve the overall quality and performance of the mixture in the slurry.

S103, staged sintering is performed to obtain the positive electrode material 100. The positive electrode material 100 includes multiple positive electrode particles. Each of the multiple positive electrode particles includes a coating layer and a core. The core is made of the iron-based phosphate material. The coating layer is coated around a surface of the core. The carbon source is carbonized to form the coating layer. The sodium source, the iron source, and the phosphorus source form the core made of the iron-based phosphate material.

It can be understood that, the iron-based phosphate material includes a first active material and a second active material.

Performing the staged sintering includes the following.

S 1031, first staged sintering is performed on the first intermediate particles at a first temperature to form second intermediate particles, where the carbon source is carbonized to form the coating layer, and the sodium source, the iron source, and the phosphorus source form the first active material.

S 1032, second staged sintering is performed on the second intermediate particles at a second temperature to form the positive electrode material, where the positive electrode material includes the first active material and the second active material, the carbon source is further carbonized, and after the sodium source, the iron source, and the phosphorus source form the second intermediate particles, part of the second intermediate particles are further decomposed into the second active material at the second temperature, and the second temperature is higher than the first temperature.

**In** this embodiment, after the sodium source, the iron source, and the phosphorus source are mixed, sand milled, and spray dried, during the first staged sintering, the sodium source, the iron source, and the phosphorus source form the first active material, and the first active material has a relatively high theoretical capacity per gram in the full operating voltage range of the battery 300, which is conducive to increasing the theoretical capacity per gram of the second intermediate particle. In addition, during the first staged sintering, the carbon source is carbonized to form the coating layer to improve the conductivity of the second intermediate particle. Further, by performing the second staged sintering on the second intermediate particles at the second temperature, during the second staged sintering, part of the first active material can be decomposed to form the second active material and the third active material, so that the first active material is doped with the second active material and the third active material, the second active material can make up for the defect of low discharge capacity per gram of the first active material at low voltage, and the third active material can increase the energy density of the finally formed positive electrode particles. Therefore, when the positive electrode particles are applied to the battery 300, even if the discharge voltage of the battery 300 is low, the positive electrode material 100 can still have a relatively high discharge capacity per gram. The preparation method for the positive electrode material 100 provided in the present disclosure has a simple operation process, and is convenient to reduce the preparation cost of the positive electrode material 100. Moreover, the discharge capacity per gram of the positive electrode material 100 prepared by the preparation method for the positive electrode material 100 in the full operating voltage range of the battery 300 is maintained at a relatively high level, so that when the positive electrode material 100 is applied to the battery 300, the battery 300 has a relatively high energy density.

It can be understood that, a synthesis temperature of the first active material ranges from 430 °C to 550 °C. Specifically, the synthesis temperature of the first active material may be, but is not limited to, 430 °C, 450 °C, 460 °C, 465 °C, 470 °C, 475 °C, 480 °C, 485 °C, 490 °C, 500 °C, 505 °C, 515 °C, 520 °C, 525 °C, 530 °C, 545 °C, 548 °C, 550 °C, etc.

In some implementation, the first temperature *T1* satisfies: 450 °C ≤ T1 ≤ 550 °C.

Specifically, the first temperature *T1* may be, but is not limited to, 450 °C, 460 °C, 465 °C, 470 °C, 475 °C, 480 °C, 485 °C, 490 °C, 500 °C, 505 °C, 515 °C, 520 °C, 525 °C, 530 °C, 545 °C, 548 °C, 550 °C, or the like.

In this embodiment, when the first temperature *T1* satisfies: 450 °C ≤ *T1* ≤ 550 °C, the first temperature *T1* at which the first staged sintering is performed on the first intermediate particles is within a reasonable range. When the first staged sintering is performed on the first intermediate particles, the sodium source, the iron source, and the phosphorus source in the first intermediate particles interact with each other to synthesize the first active material. In addition, in this temperature range, the sodium source, the iron source, and the phosphorus source can fully synthesize the first active material, so that the mass content of the first active material in the second intermediate particles and the finally synthesized positive electrode particles is relatively high, thereby increasing the theoretical capacity per gram of the positive electrode material 100 in the full operating voltage range of the battery 300, and increasing the energy density of the battery 300 when the positive electrode material 100 is applied to the positive electrode 200 and assembled into the battery 300. Further, the carbon source can be fully carbonized to form the coating layer, and coated around the surface of the core made of the iron-based phosphate material to improve the conductivity of the positive electrode material 100. When the first temperature *T1* is too high, and the first temperature exceeds the synthesis temperature of the first active material, the first active material synthesized by the interaction of the sodium source, the iron source, and the phosphorus source may be decomposed during the first staged sintering. As a result, the mass fraction of the first active material in the final synthesized positive electrode particles is too low, so that the theoretical capacity per gram of the positive electrode material 100 in the full operating voltage range of the battery 300 is reduced, and the energy density of the battery 300 is reduced when the positive electrode material 100 is applied to the positive electrode 200 and assembled into the battery 300. When the first temperature *T1* is too low, and the first temperature is difficult to reach the synthesis temperature of the first active material, during the first staged sintering, the sodium source, the iron source, and the phosphorus source in the first intermediate particles are difficult to interact with each other to synthesize the first active material, so that the mass content of the first active material in the final synthesized positive electrode particles is too low. As a result, the theoretical capacity per gram of the positive electrode material 100 in the full operating voltage range of the battery 300 is reduced, and the energy density of the battery 300 is reduced when the positive electrode material 100 is applied to the positive electrode 200 and assembled into the battery 300.

It can be understood that, a synthesis temperature of the second active material ranges from 580 °C to 620 °C. Specifically, the synthesis temperature of the second active material may be, but is not limited to, 580 °C, 585 °C, 590 °C, 595 °C, 600 °C, 605 °C, 610 °C, 615 °C, 620 °C, etc.

In some embodiments, the second temperature *T2* satisfies: 590 °C ≤ T2 ≤ 650 °C.

Specifically, the second temperature *T2* may be, but is not limited to, 590 °C, 595 °C, 600 °C, 605 °C, 610 °C, 615 °C, 620 °C, 622 °C, 625 °C, 630 °C, 635 °C, 638 °C, 640 °C, 645 °C, 650 °C, etc.

In this embodiment, when the second temperature *T2* satisfies: 590 °C ≤ *T2* ≤ 650 °C, the second temperature at which the second staged sintering is performed on the second intermediate particles is within a reasonable range. During the second staged sintering being performed on the second intermediate particles, part of the first active material in the second intermediate particles is decomposed into the second active material and the third active material, and the amount of the generated second active material and the amount of the generated third active material are within a reasonable range. In addition, there are still part of the sodium source, part of the iron source, and the part of the phosphorus source remaining in the second intermediate particles, and the second active material is synthesized during the second staged sintering. The second active material can make up for the defect of low discharge capacity per gram of the first active material at low voltage, and the third active material can increase the energy density of the finally formed positive electrode particles, so that when the positive electrode particles are applied to the battery 300, even if the discharge voltage of the battery 300 is low, the positive electrode material 100 can still have a relatively high discharge capacity per gram. When the positive electrode material 100 is applied to the battery 300, the battery 300 has a relatively high energy density. Further, the coating layer may be further carbonized, so that a uniform coating layer is formed on the surface of the iron-based phosphate material, thereby further improve the conductivity of the positive electrode material 100. However, when the second temperature is too high, the first active material will be rapidly decomposed into the second active material and the third active material, so that the mass content of the first active material and the second active material exceeds a reasonable range, and accordingly, the mass content of the first active material in the positive electrode material 100 decreases, resulting in a decrease in the capacity per gram of the positive electrode material 100 in the full voltage range. When the second temperature is too low, the second temperature is difficult to reach the decomposition temperature of the first active material, and the first active material is difficult to be decomposed and generate the second active material, so that the mass fraction of the second active material in the final generated positive electrode particles is too low or zero. When the positive electrode material 100 is used for the battery 300, the discharge capacity per gram of the positive electrode material 100 at low voltage is low, which reduces the use performance of the battery 300.

In some embodiments, a period during which the first staged sintering is performed on the first intermediate particles is *t1*, and *t1* satisfies: 6 h ≤ *t1* ≤ 15 h.

Specifically, the period *t1* during which the first staged sintering is performed on the first intermediate particles may be, but is not limited to, 6 h, 6.2 h, 6.5 h, 6.8 h, 7 h, 7.2 h, 7.5 h, 8 h, 8.4 h, 8.8 h, 9 h, 9.5 h, 10 h, 10.5 h, 11 h, 11.5 h, 12 h, 12.5 h, 13 h, 13.4 h, 13.8 h, 14 h, 14.5 h, 15 h, etc.

In this embodiment, when the period *t1* during which the first staged sintering is performed on the first intermediate particles satisfies: 6 h ≤ *t1* ≤ 15 h, the period for the first staged sintering is within a reasonable range. When the first staged sintering is performed on the first intermediate particles, the sodium source, the iron source, and the phosphorus source in the first intermediate particles can fully react and synthesize the first active material, so that the mass content of the first active material in the second intermediate particles and the finally synthesized positive electrode particles is relatively high. Therefore, the theoretical capacity per gram of the positive electrode material 100 in the full operating voltage range of the battery 300 is increased, and the energy density of the battery 300 is increased when the positive electrode material 100 is applied to the positive electrode 200 and assembled into the battery 300. In addition, the carbon source can be fully carbonized to form the coating layer, and coated around the surface of the core made of the iron-based phosphate material to improve the conductivity of the positive electrode material 100. When the period for the first staged sintering is too long, after the first active material is synthesized by the interaction of the sodium source, the iron source, and the phosphorus source during the first staged sintering, if the sintering period is too long, the first active material may be decomposed, resulting in too low mass fraction of the first active material in the final synthesized positive electrode particles. As a result, the theoretical capacity per gram of the positive electrode material 100 in the full operating voltage range of the battery 300 is reduced, and the energy density of the battery 300 is reduced when the positive electrode material 100 is applied to the positive electrode 200 and assembled into the battery 300. When the period for the first staged sintering is too short, it is difficult for the sodium source, the iron source, and the phosphorus source in the first intermediate particles to interact with each other to synthesize the first active material during the first staged sintering, or the amount of the first active material synthesized by the interaction of the sodium source, the iron source, and the phosphorus source is too small, so that the mass content of the first active material in the second intermediate particles and the finally synthesized positive electrode particles is too low. As a result, the theoretical capacity per gram of the positive electrode material 100 in the full operating voltage range of the battery 300 is reduced, and the energy density of the battery 300 is reduced when the positive electrode material 100 is applied to the positive electrode 200 and assembled into the battery 300.

In some embodiments, a period during which the second staged sintering is performed on the second intermediate particles is *t2,* and *t2* satisfies: 1 h *≤ t2* ≤ 4 h.

Specifically, the period *t2* during which the second staged sintering is performed on the second intermediate particles may be, but is not limited to, 1 h, 1.1 h, 1.4 h, 1.6 h, 1.8 h, 2 h, 2.2 h, 2.3 h, 2.5 h, 2.6 h, 2.7 h, 2.8 h, 2.9 h, 3 h, 3.2 h, 3.3 h, 3.4 h, 3.6 h, 3.7 h, 3.8 h, 3.9 h, 4 h, etc.

In this embodiment, when the period *t2* during which the second staged sintering is performed on the second intermediate particles satisfies: 1 h ≤ *t2* ≤ 4 h, the period *t2* for the second staged sintering is within a reasonable range. When the second staged sintering is performed, the amount of the second active material generated by decomposition of the first active material is within a reasonable range, so that the mass fraction of the first active material and the mass fraction of the second active material in the final generated positive electrode particles are both within a reasonable range. The second active material cannot only make up for the deficiency of the low discharge capacity per gram of the first active material at low voltage, but also maintain the discharge capacity per gram of the positive electrode material 100 at a relatively high level in the full operating voltage range of the battery 300, so that the battery 300 has a relatively high energy density when the positive electrode material 100 is applied to the positive electrode 200 and assembled into the battery 300. In addition, the influence on the intercalation and deintercalation of active ions due to the low discharge capacity per gram of the battery 300 at low voltage can be avoided, and the structural change of the positive electrode material 100 can be avoided, so that the battery 300 has a relatively long service life. When the period for the second staged sintering is too long, the second active material generated by decomposition of the first active material is excessive during the second staged sintering, so that the mass fraction of the second active material in the final generated positive electrode particles is too high, and accordingly, the mass fraction of the first active material in the positive electrode particles is too low. Although the second active material can make up for the deficiency of the low discharge capacity per gram of the first active material at low voltage, the theoretical capacity per gram of the second active material is lower than the theoretical capacity per gram of the first active material. As a result, the discharge capacity per gram of the positive electrode material 100 in the full operating voltage range of the battery 300 is reduced, thereby reducing the energy density of the battery 300. When the period for the second staged sintering is too short, the second active material generated by decomposition of the first active material is too small during the second staged sintering, so that the mass fraction of the second active material in the final generated positive electrode particles is too low or zero. As a result, when the positive electrode material 100 is used for the battery 300, the discharge capacity per gram of the positive electrode material 100 at low voltage is low, which reduces the use performance of the battery 300.

Optionally, the second intermediate particles are heated from the first temperature to the second temperature, where a heating rate *T'* satisfies: 8 °C/min ≤ *T'* ≤ 12 °C/min.

Specifically, the heating rate *T'* may be, but is not limited to, 8 °C/min, 8.2 °C/min, 8.4 °C/min, 8.6 °C/min, 8.8 °C/min, 9 °C/min, 9.2 °C/min, 9.4 °C/min, 9.8 °C/min, 10 °C/min, 10.2 °C/min, 10.5 °C/min, 10.8 °C/min, 11 °C/min, 11.2 °C/min, 11.6 °C/min, 11.8 °C/min, and 12 °C/min.

In this embodiment, when the heating rate *T'* satisfies: 8 °C/min ≤ *T'* ≤ 12 °C/min, the heating rate at which the second intermediate particles are heated from the first temperature to the second temperature is within a reasonable range, so that the second intermediate particles can be rapidly heated, and thus decomposition of most of the first active material in the second intermediate particles due to an excessively long period interval from the first staged sintering to the second staged sintering can be avoided. Therefore, the mass fraction of the first active material and the mass fraction of the second active material in the final generated positive electrode particles are both within a reasonable range, so that the second active material cannot make up for the defect of insufficient discharge capacity per gram of the first active material at low voltage, but also maintain the discharge capacity per gram of the first active material 100 at a relatively high level in the full operating voltage range of the battery 300. When the heating rate is too large, the actual temperature lags behind the preset temperature, which hinders part of the first active material in the second intermediate particle from being decomposed into the second active material, so that the mass fraction of the first active material is larger than a reasonable range, and the mass fraction of the second active material is smaller than a reasonable range. As a result, when the positive electrode material 100 is used for the battery, the discharge capacity per gram of the positive electrode material 100 at low voltage is low, which reduces the use performance of the battery 300. When the heating rate is too small, the period interval between the first staged sintering and the second staged sintering is too long, and excessive amount of the first active material is decomposed to generate the second active material, so that the mass fraction of the first active material in the final generated positive electrode particles is too small, while the mass fraction of the second active material in the final generated positive electrode particles is too large. As a result, although the addition of the second active material can increase the discharge capacity per gram of the positive electrode material 100 at low voltage, excessive addition of the second active material reduces the discharge capacity per gram of the positive electrode material 100 in the full operating voltage range of the battery 300, so that the energy density of the battery 300 is too small.

In some embodiments, providing the sodium source, the iron source, the phosphorus source, and the carbon source, and mixing the sodium source, the iron source, the phosphorus source, and the carbon source to obtain the slurry, includes the following. A molar ratio α of a sodium element in the sodium source to an iron element in the iron source satisfies: 1.33 ≤ α ≤ 1.43.

Specifically, the molar ratio α of the sodium element in the sodium source to the iron element in the iron source may be, but is not limited to, 1.33, 1.34, 1.35, 1.36, 1.37, 1.38, 1.39, 1.4, 1.41, 1.42, 1.43, etc.

It can be understood that, the amount of substance of the sodium element in the sodium source is greater than the amount of substance of the iron element in the iron source.

In this embodiment, when the molar ratio α of the sodium element in the sodium source to the iron element in the iron source satisfies: 1.33 ≤ α ≤ 1.43, the molar ratio of the sodium element in the sodium source to the iron element in the iron source is within a reasonable range. The positive electrode particles are formed after sand milling and spray drying the slurry, and performing the staged sintering on the slurry, and the sodium content in the positive electrode particles is within a reasonable range, so that the bonding of iron-oxygen bonds in the positive electrode particles is stable, and the stability of the positive electrode particles is improved. When the positive electrode particles are applied to the positive electrode 200 and assembled into the battery 300, the battery 300 has relatively good charge and discharge performance and a relatively long cycle life. In addition, it is also possible to avoid excessive sodium content in the positive electrode particles and thus avoid formation of residual alkali on the surface of the positive electrode particles, so that the positive electrode 200 has relatively good processing performance when the positive electrode particles are applied to the positive electrode 200. When the molar ratio α of the sodium element in the sodium source to the iron element in the iron source is too large, the amount of substance of the sodium element in the sodium source is too large in the slurry, and the excess part of the sodium source combines with the anions in the slurry to form residual alkali. As a result, after sand milling and spray drying the slurry, and performing the staged sintering on the slurry to obtain the positive electrode particles, part of residual alkali may be present on the surface of the positive electrode particles, so that in the process of applying the positive electrode material 100 to the positive electrode 200, the processing performance of the positive electrode 200 may be affected. It can be understood that, when the positive electrode material 100 is in a fully sodiated state, the bonding of the iron-oxygen bonds of the positive electrode material 100 is more stable. When the molar ratio α of the sodium element in the sodium source to the iron element in the iron source is too small, the positive electrode particles are formed after sand milling and spray drying the slurry and performing the staged sintering on the slurry, and the sodium content in the positive electrode particles is too small, so that the bonding and formation of iron-oxygen bonds of the positive electrode particles are relatively poor, and the positive electrode particles are easy to collapse. As a result, when the positive electrode material 100 is applied to the positive electrode 200 and assembled to the battery 300, the charge and discharge performance of the battery 300 may be reduced or the cycle life of the battery 300 may be shortened.

Optionally, in some embodiments, a molar ratio *β* of the iron element in the iron source to a phosphorus element in the phosphorus source satisfies: 0.68 ≤ *β* ≤ 0. 75.

Specifically, the molar ratio *β* of the iron element in the iron source to the phosphorus element in the phosphorus source may be, but is not limited to, 0.68, 0.69, 0.7, 0.71, 0.72, 0.73, 0.74, 0.75, etc.

It can be understood that, the amount of substance of the iron element in the iron source is less than the amount of substance of the phosphorus element in the phosphorus source.

In this embodiment, when the molar ratio *β* of the iron element in the iron source to the phosphorus element in the phosphorus source satisfies: 0.68 ≤ *β* ≤ 0. 75, the molar ratio of the iron element in the iron source to the phosphorus element in the phosphorus source is within a reasonable range. Therefore, in the positive electrode particles, the mass fraction of the first active material and the mass fraction of the second active material are both within a reasonable range. The second active material cannot only make up for the deficiency of the low discharge capacity per gram of the first active material at low voltage, but also maintain the discharge capacity per gram of the positive electrode material 100 at a relatively high level in the full operating voltage range of the battery 300, so that the battery 300 has a relatively high energy density when the positive electrode material 100 is applied to the positive electrode 200 and assembled into the battery 300. In addition, the influence on the intercalation and deintercalation of active ions due to the low discharge capacity per gram of the battery 300 at low voltage can be avoided, and the structural change of the positive electrode material 100 can be avoided, so that the battery 300 has a relatively long service life. When the molar ratio *β* of the iron element in the iron source to the phosphorus element in the phosphorus source is too large, in the positive electrode particles, the first active material formed is much more than the second active material, so that in the iron-based phosphate material, the mass fraction of the first active material is too large and the mass fraction of the second active material is too small. The effect of doping the second active material into the first active material to improve the discharge capacity per gram of the positive electrode material 100 at low voltage is relatively poor, so that when the positive electrode material 100 is applied to the positive electrode 200 and assembled into the battery 300, the discharge capacity per gram of the battery 300 at low voltage is relatively low, which reduces the energy density of the battery 300, and limits the intercalation and deintercalation of active ions in the battery 300. As a result, the structure of the positive electrode material 100 changes, which in turns affects the structural stability of the positive electrode 200, thereby shortening the cycle life of the battery 300. When the molar ratio *β* of the iron element in the iron source to the phosphorus element in the phosphorus source is too small, in the positive electrode particles, the first active material formed in the positive electrode particles is less than or although slightly more than the second active material, so that in the iron-based phosphate material, the mass fraction of the first active material is too small and the mass fraction of the second active material is too large. However, although the second active material can make up for the deficiency of the low discharge capacity per gram of the first active material at low voltage, the theoretical capacity per gram of the second active material is lower than the theoretical capacity per gram of the first active material, so that the discharge capacity per gram of the positive electrode material 100 in the full operating voltage range of the battery 300 is reduced, thereby reducing the energy density of the battery 300.

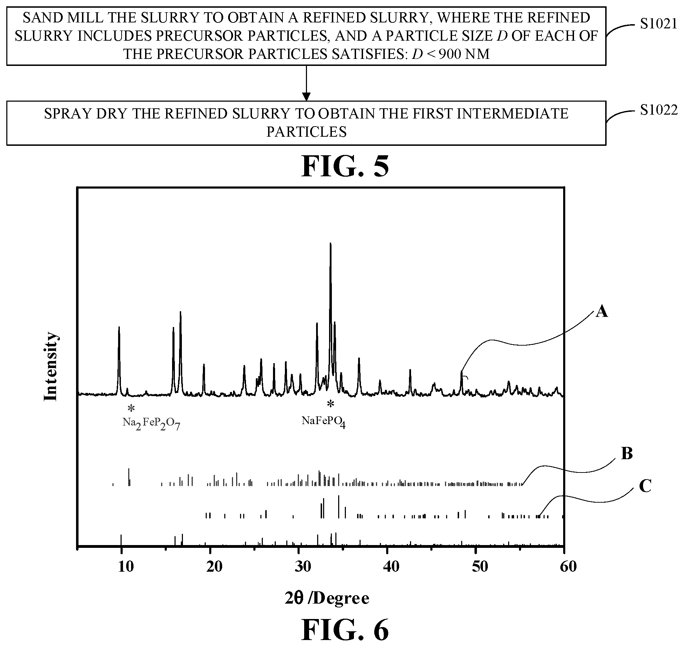

Referring to FIG. 5, in some embodiments, sand milling and spray drying the slurry to obtain first intermediate particles, includes the following.

S 1021, sand milling the slurry to obtain a refined slurry, where the refined slurry includes precursor particles, and a particle size *D* of each of the precursor particles satisfies: *D* < 900 nm.

Specifically, the particle size *D* of the precursor particle may be, but is not limited to, 500 nm, 550 nm, 580 nm, 590 nm, 600 nm, 620 nm, 650 nm, 670 nm, 680 nm, 700 nm, 720 nm, 750 nm, 780 nm, 800 nm, 825 nm, 850 nm, 875 nm, 899 nm, etc.

S 1022, the refined slurry is spray dried to obtain the first intermediate particles.

In this embodiment, the slurry is sand milled to obtain the refined slurry including the precursor particles, so that the refined slurry has relatively high uniformity and stability, and the overall performance of the refined slurry is improved. Therefore, the uniformity of the iron-based phosphate material in the final obtained positive electrode particles is relatively good, so that the positive electrode particles have relatively good use performance. In this embodiment, when the particle size *D* of the precursor particle satisfies: *D <* 900 nm, in the refined slurry, adjacent precursor particles can be fully and uniformly contacted, and the sodium source, the phosphorus source, and the iron source in the slurry can be avoided from forming other impurity phases during further sintering, which is conducive to improving the purity of the final generated positive electrode material 100, and then improving the charge and discharge cycle performance of the battery 300 when the positive electrode material 100 is applied to the cathode piece 200 and assembled into the battery 300.

The technical solution of the present disclosure is further explained by multiple embodiments below.

Embodiment 1 to embodiment 8, and comparative example 1 are as follows.

### 1. Preparation of positive electrode material 100:

### (1) Preparation operations of positive electrode material 100:

Operation one: provide a sodium source, an iron source, a phosphorus source, and a carbon source, mix the sodium source, the iron source, the phosphorus source, and the carbon source to obtain a slurry. A molar ratio α of a sodium element in the sodium source to an iron element in the iron source satisfies: 1.33 ≤ α ≤ 1.43. A molar ratio *β* of the iron element in the iron source to a phosphorus element in the phosphorus source satisfies: 0.68 ≤ *β* ≤ 0. 75. α and *β* in each of embodiment 1 to embodiment 8 and comparative example 1 are shown in Table 1.

Operation two: sand mill the slurry to obtain a refined slurry, where the refined slurry includes precursor particles, and a particle size *D* of each of the precursor particles satisfies: *D* < 900 nm; and spray dry the refined slurry to obtain the first intermediate particles.

Operation three: perform first staged sintering on the first intermediate particles at a first temperature to form second intermediate particles, where the first temperature is *T1*, and a period for the first staged sintering is *t1. T1* and *t1* in each of embodiment 1 to embodiment 8 and comparative example 1 are shown in Table 1.

Operation four: perform second staged sintering on the second intermediate particles at a second temperature to form the positive electrode particles, where the second temperature is *T2,* and a period for the second staged sintering is *t2. T2* and *t2* in each of embodiment 1 to embodiment 8 and comparative example 1 are shown in Table 1.

(2) Test of the mass fraction *a1* of the first active material, the mass fraction *a2* of the second active material, and the mass fraction *a4* of the third active material in the positive electrode material 100:
The mass fraction *a1* of the first active material, the mass fraction *a2* of the second active material, and the mass fraction a4 of the third active material of the positive electrode material 100 in each of embodiment 1 to embodiment 8 and comparative example 1 are obtained by X-ray diffraction (XRD) phase analysis and refinement. Specifically, the positive electrode material 100 in each of embodiment 1 to embodiment 8 and comparative example 1 is analyzed by an X-ray diffraction analyzer, with a scanning range of 5 ° to 60 ° and a scanning speed of 1 °/min to 5 °/min, so as to obtain an XRD spectrum composed of the first active material, the second active material, and the third active material. As illustrated in FIG. 6,*A* indicates a diffraction peak curve of a positive electrode material, where the positive electrode material includes a first active material, a second active material, and a third active material; *B* is an XRD standard powder diffraction file (PDF) card of the second active material; and C is an XRD standard PDF card of the third active material. A diffraction peak at (0, 1, 1) crystal plane is a characteristic diffraction peak of the second active material, as shown at a position indicated by an asterisk in FIG. 6. A diffraction peak at (1, 4, 2) crystal plane is a characteristic diffraction peak of the third active material, as shown at a position indicated by another asterisk in FIG. 6. The other characteristic diffraction peaks are characteristic diffraction peaks of the first active material. The intensity of the characteristic peak of the crystal plane represents the content of the phase in the positive electrode material 100. Combined with the obtained XRD spectra, full-map fitting refinement is performed on the XRD spectra to obtain the mass fraction *a1* of the first active material, the mass fraction *a2* of the second active material, and the mass fraction *a4* of the third active material in each of embodiment 1 to embodiment 8 and comparative example 1, by using total pattern analysis solution (Topas) software, according to a model of the diffraction position and the relative intensity of the characteristic diffraction peak.

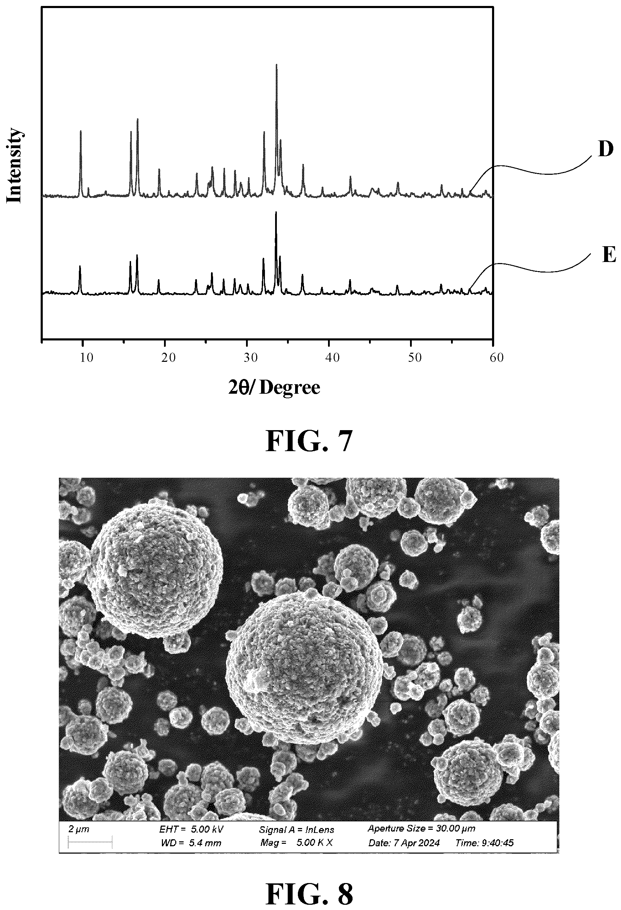

Reference can be made to FIG. 7, which is XRD contrast spectra of embodiment 5 and comparative example 1. *D* indicates an XRD spectrum of embodiment 5. *E* indicates an XRD spectrum of comparative example 1.

The mass fraction *a1* of the first active material, the mass fraction *a2* of the second active material, and the mass fraction *a4* of the third active material in each of embodiment 1 to embodiment 8 and comparative example 1 are shown in Table 1.

(3) Test of mass fraction *a3* of coating layer in positive electrode particle:
The mass fraction of the coating layer in the positive electrode particle is measured by a highfrequency infrared carbon and sulfur analyzer. The mass fraction *a3* of the coating layer in the positive electrode particle in each of embodiment 1 to embodiment 8 and comparative example 1 are shown in Table 1.

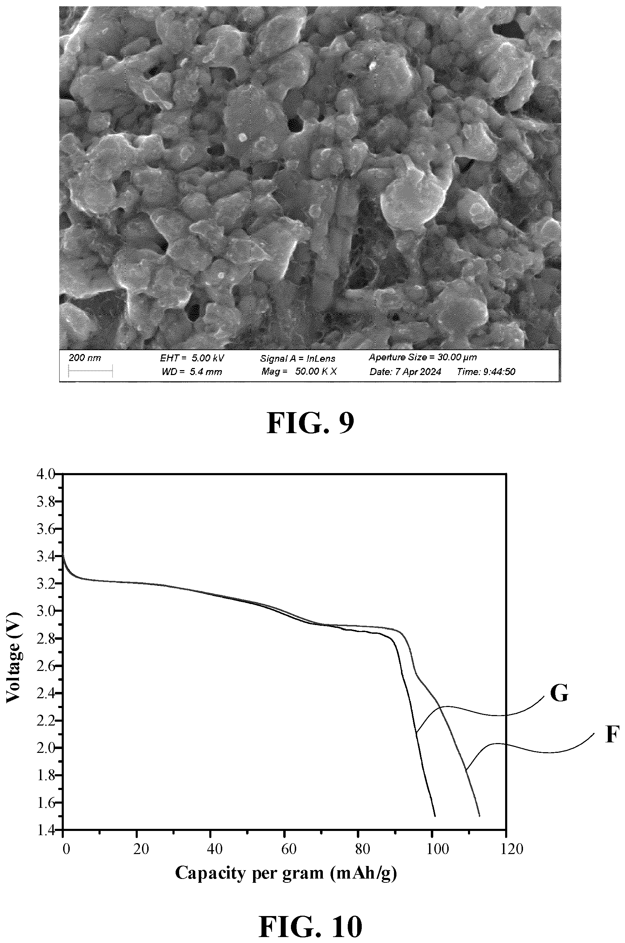

As illustrated in FIG. 8 and FIG. 9, the positive electrode particles of the positive electrode material 100 are observed under a microscope.

As illustrated in FIG. 8, the positive electrode material 100 includes multiple positive electrode particles. FIG. 9 shows an enlargement of a surface of a positive electrode particle, and a "cobweb"-shaped structure shown in FIG. 9 is a coating layer coated around a core made of an iron-based phosphate material.

### 2. Preparation of positive electrode 200:

A positive electrode slurry is prepared according to a mass ratio of the positive electrode material 100: polyvinylidene fluoride: acetylene black = 8: 1: 1, is coated on the positive current collector 210, and then is cut to form the positive electrode 200.

### 3. Preparation of negative electrode 320:

The negative electrode 320 is a sodium sheet.

### 4. Preparation of separator 330 and electrolytic solution 310:

A polyethylene film of 16 um is used as the separator 330.

The electrolytic solution 310 used is an electrolytic solution 310 with an electrolyte of NaClO₄. The formulation of the electrolytic solution 310 with the electrolyte of NaClO₄ is as follows. Sodium perchlorate (NaClO₄) is dissolved in an electrolytic solution with a concentration of 1 mol/L formulated from ethylene carbonate and diethyl carbonate in a volume ratio of 1:1, and an additive fluoroethylene carbonate (FEC) is added, where a ratio of the mass of the additive to the sum of the masses of the additive and the electrolytic solution is 5%.

5. Assembly of embodiment battery: The positive electrode 200, the negative electrode 320, the separator 330, and the electrolytic solution 310 prepared in each of embodiment 1 to embodiment 8 and comparative example 1 are assembled into embodiment battery, so as to form embodiment battery 1 to embodiment battery 8 and comparative battery 1. The discharge voltage of each of embodiment battery 1 to embodiment battery 8 and comparative battery 1 ranges from 1.5 V to 3.5 V. The positive electrode 200, the negative electrode 320, the separator 330, and the electrolytic solution 310 in embodiment 1 are assembled into embodiment battery 1, the positive electrode 200, the negative electrode 320, the separator 330, and the electrolytic solution 310 in embodiment 2 are assembled into embodiment battery 2, the positive electrode 200, the negative electrode 320, the separator 330, and the electrolytic solution 310 in comparative example 1 are assembled into comparative battery 1, and so on.

Table 1 below is a table of structural parameters and preparation parameters of the positive electrode material 100 in each of embodiment 1 to embodiment 8 and comparative example 1.

**Table 1: Table of structural parameters and preparation parameters of positive electrode material 100 in each of embodiment 1 to embodiment 8 and comparative example 1**

| Embodiment/ comparative example | a | *β* | *T1* (°C) | *t1* (h) | *T2* (°C) | *t2* (h) | *a1* (%) | *a2* (%) | *a2*/*a 1* | *a4* (%) | *a3* (%) |
|---|---|---|---|---|---|---|---|---|---|---|---|
| Comparative example 1 | 1.35 | 0.68 | 470 | 16 | 0 | 0 | 98.5 | 0 | 0 | 1.5 | 3 |
| Embodiment 1 | 1.33 | 0.69 | 480 | 8 | 610 | 1.5 | 96.8 | 2 | 0.02 1 | 1.2 | 3.1 |
| Embodiment 2 | 1.34 | 0.7 | 490 | 9 | 590 | 1 | 95.1 | 4 | 0.04 2 | 0.9 | 2.5 |
| Embodiment 3 | 1.35 | 0.68 | 470 | 10 | 600 | 2 | 92.4 | 6 | 0.06 5 | 1.6 | 2.7 |
| Embodiment 4 | 1.37 | 0.71 | 510 | 12 | 620 | 3 | 91.2 | 8 | 0.08 8 | 0.8 | 3.3 |
| Embodiment 5 | 1.38 | 0.72 | 520 | 15 | 640 | 2.5 | 89.2 | 10 | 0.112 | 1.8 | 2.1 |
| Embodiment 6 | 1.40 | 0.73 | 500 | 11 | 620 | 4 | 86.7 | 12 | 0.13 8 | 1.3 | 3 |
| Embodiment 7 | 1.41 | 0.74 | 490 | 7 | 630 | 3 | 84.4 | 14 | 0.16 6 | 1.6 | 2.8 |
| Embodiment 8 | 1.43 | 0.75 | 500 | 10 | 650 | 3.5 | 83 | 15 | 0.18 1 | 2 | 3.2 |

Electrochemical performance test of battery 300:
The assembled embodiment batteries 1 to 8 and comparative battery 1 are subjected to a charge and discharge test.

The aforementioned assembled battery 300 is tested on a blue battery test system, and then the battery 300 is first charged to 3.5 V at a rate of 0.1 C, and then discharged to 1.5 V at a rate of 0.1 C. The charge and discharge cycle is carried out according to this program to obtain the discharge capacity per gram curve of the battery 300, as illustrated in FIG. 10. From the curve, it can be seen that, for each of embodiment battery 1 to embodiment battery 8 and comparative battery 1, the corresponding discharge capacity per gram at 1.5 V is the discharge capacity per gram of the battery discharged from 3.5 V to 1.5 V, and a difference between the corresponding discharge capacity per gram at 2.6 V and the corresponding discharge capacity per gram at 1.5 V is the discharge capacity per gram of the battery discharged from 2.6 V to 1.5 V.

For each of embodiment battery 1 to embodiment battery 8 and comparative battery 1, the discharge capacity per gram discharged from 2.6 V to 1.5 V and the discharge capacity per gram discharged from 3.5 V to 1.5 V are shown in Table 2. In addition, reference can be made to FIG. 10, which is a diagram of curves of discharge capacity per gram of embodiment battery 5 and comparative battery 1 discharged from 3.5 V to 1.5 V. *F* indicates is a curve of discharge capacity per gram of embodiment battery 5. G indicates a curve of discharge capacity per gram of comparative battery 1.

**Table 2: Table of electrochemical performance parameters of each of embodiment battery 1 to embodiment battery 8 and comparative battery 1**

| Embodiment battery/ comparative battery | Discharge capacity per gram (mAh/g) discharged from 2.6 V to 1.5 V | Discharge capacity per gram (mAh/g) discharged from 3.5 V to 1.5 V |
|---|---|---|
| Comparative battery 1 | 3 | 101 |
| Embodiment battery 1 | 6.8 | 105.2 |
| Embodiment battery 2 | 9.2 | 108.1 |
| Embodiment battery 3 | 10.5 | 110.5 |
| Embodiment battery 4 | 13 | 113.0 |
| Embodiment battery 5 | 13.8 | 109.4 |
| Embodiment battery 6 | 14.7 | 107.6 |
| Embodiment battery 7 | 15 | 104.5 |
| Embodiment battery 8 | 15.2 | 102 |

It can be understood that, the discharge capacity per gram of each of embodiment battery 1 to embodiment battery 8 and comparative battery 1 discharged from 3.5 V to 1.5 V, can characterize the theoretical capacity per gram of the positive electrode material 100 in the full operating voltage range. The discharge capacity per gram of each of embodiment battery 1 to embodiment battery 8 and comparative battery 1 discharged from 2.6 V to 1.5 V, can characterize the amount of charge provided by the positive electrode material 100 in the low voltage range of battery 300.

From the data in Table 1 and Table 2, it can be seen that, the mass fraction of the first active material in comparative battery 1 is the largest compared to embodiment battery 1 to embodiment battery 8, and the mass fraction of the second active material in the positive electrode material 100 in comparative example 1 is 0. In this case, the discharge capacity per gram of embodiment battery 1 discharged from 3.5 V to 1.5 V is 101 mAh/g, and the discharge capacity per gram of embodiment battery 1 discharged from 2.6 V to 1.5 V is 3 mAh/g. From the data of embodiment 1 to embodiment 8, it can be seen that in each of embodiment 1 to embodiment 8, the mass fraction *a1* of the first active material satisfies: 83% ≤ *a1* < 100%, the mass fraction *a2* of the second active material satisfies: 0 *< a2* ≤ 15%, *a2*/*a1* satisfies: 0 *< a2*/*a1* ≤ 0.2, and the mass fraction *a1* of the first active material and the mass fraction *a2* of the second active material are both within a reasonable range. In addition, the mass fraction *a4* of the third active material layer and the mass fraction *a3* of the coating layer are both within a reasonable range. From the data of embodiment battery 1 to embodiment battery 8, it can be seen that as the mass fraction of the second active material gradually increases, the discharge capacities per gram of embodiment battery 1 to embodiment battery 8 discharged from 2.6 V to 1.5 V gradually increase. However, accordingly, the discharge capacities per gram of embodiment battery 1 to embodiment battery 8 discharged from 3.5 V to 1.5 V increase and then decrease. In embodiment battery 4, the mass fraction of the first active material is 91.2%, and when the mass fraction of the second active material is 8%, the discharge capacity per gram of embodiment battery 4 discharged from 3.5 V to 1.5 V reaches the maximum. This is because: by doping the second active material into the first active material, the second active material can make up for the defect of insufficient discharge capacity per gram of the first active material at low voltage, and when the mass fraction of the first active material and the mass fraction of the second active material are both within a reasonable range, the second active material cannot only make for the defect of insufficient discharge capacity per gram of the first active material at low voltage, but also maintain the discharge capacity per gram of the positive electrode material 100 at a relatively high level in the full operating voltage range of the battery 300. In other words, when the mass fraction of the first active material and the mass fraction of the second active material are within a reasonable range, the discharge capacity per gram of the battery 300 discharged from 3.5 V to 1.5 V and the discharge capacity per gram of the battery 300 discharged from 2.6 V to 1.5 V are both relatively large. Further, as the mass fraction of the second active material gradually increases, although the second active material can make up for the defect of insufficient discharge capacity per gram of the first active material at low voltage to improve the discharge capacity per gram of the battery 300 discharged from 2.6 V to 1.5 V, the decrease in the mass fraction of the first active material causes the gradual decrease in the discharge capacity per gram of the positive electrode material 100 in the full operating voltage range of the battery 300, thereby resulting in the gradual decrease in the discharge capacity per gram of the battery 300 discharged from 3.5 V to 1.5 V.

Further, from the data from embodiment 1 to embodiment 8, it can be seen that the molar ratio α of the sodium element in the sodium source to the iron element in the iron source satisfies: 1.33 ≤ α ≤ 1.43, the molar ratio *β* of the iron element in the iron source to the phosphorus element in the phosphorus source satisfies: 0.68 ≤ *β* ≤ 0.75, the first temperature *T1* satisfies: 450 °C ≤ *T1* ≤ 550 °C, the second temperature *T2* satisfies: 590 °C ≤ *T2* ≤ 650 °C, the period *t1* during which the first staged sintering is performed on the first intermediate particles satisfies: 6 h ≤ *t1* ≤ 15 h, and the period *t2* during which the second staged sintering is performed on the second intermediate particles satisfies: 1 h ≤ *t2* ≤ 4 h. Therefore, in the generated iron-based phosphate material, the mass fraction α of the first active material and the mass fraction *β* of the second active material are within a reasonable range, so that the second active material cannot only make up for the defect of the insufficient discharge gram capacity of the first active material at low voltage, but also maintain the discharge capacity per gram of the positive electrode material 100 at a relatively high level in the full operating voltage range of the battery 300. Therefore, when the positive electrode material 100 is applied to the positive electrode 200 and assembled into the battery 300, the battery 300 has the relatively high energy density, and finally, the discharge capacity per gram of each of embodiment battery 1 to embodiment battery 8 discharged from 2.6 V to 1.5 V and discharged from 3.5 V to 1.5 V are both relatively high. However, in comparative example 1, the period *t1* during which the first staged sintering is performed on the first intermediate particles is more than 15 h, and the second intermediate particles are not sintered, so that in the generated iron-based phosphate material, the mass fraction *a2* of the second active material is 0, and the discharge capacity per gram of the first active material at low voltage is low. As a result, when the positive electrode material 100 is applied to the positive electrode 200 and assembled into the battery 300, the amount of charge that the battery 300 can release at low voltage is relatively small, and the intercalation and deintercalation of active ions in the battery 300 is limited, so that the structure of the positive electrode material 100 changes, and then the structural stability of the positive electrode 200 is affected, thereby shortening the cycle life of the battery 300. Finally, the discharge capacity per gram of comparative battery 1 discharged from 2.6 V to 1.5 V and the discharge capacity per gram of comparative battery 1 discharged from 3.5 V to 1.5 V are both relatively low.

The term "embodiment" or "implementation" referred to herein means that a particular features, structures, or characteristics described in conjunction with embodiments may be contained in at least one embodiment of the present disclosure. Phrases appearing in various places in the specification do not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. In addition, it can be further understood that the features, structures, or characteristics described in embodiments of the disclosure may be combined arbitrarily without contradiction therebetween to form another embodiment that does not depart from the spirit and scope of the technical solutions of the present disclosure.

Finally, it may be noted that the foregoing implementations are merely intended to illustrate but not limit the technical solutions of the present disclosure. Although the present disclosure is described in detail with reference to the foregoing optimal embodiments, those of ordinary skill in the art may understand that modifications or equivalent replacements can be made to the technical solutions of the present disclosure without departing from the spirit and scope of the technical solutions of the present disclosure.

## Claims

1. A positive electrode material (100), comprising an iron-based phosphate material, wherein the iron-based phosphate material comprises a first active material and a second active material, a chemical formula of the first active material is Na₄Fe₃(PO₄)₂P₂O₇, and a chemical formula of the second active material is Na₂FeP₂O₇; and a mass fraction of the first active material in the iron-based phosphate material is *a1*, a mass fraction of the second active material in the iron-based phosphate material is *a2,* and *a1* and *a2* satisfy: 0 *< a2*/*a1* ≤ 0.2.

2. The positive electrode material (100) of claim 1, wherein the mass fraction *a1* of the first active material in the iron-based phosphate material satisfies: 83% ≤ *a1 <* 100%, and the mass fraction *a2* of the second active material in the iron-based phosphate material satisfies: 0 *< a2* ≤ 15%.

3. The positive electrode material (100) of claim 1, wherein the positive electrode material (100) comprises a plurality of positive electrode particles (110), each of the plurality of positive electrode particles (110) comprises a coating layer (130) and a core (120), the core (120) is made of the iron-based phosphate material, the coating layer (130) is coated around a surface of the core (120), and a median particle size *D50* of the positive electrode material (100) satisfies: 2 µm ≤ *D50* ≤ 5 µm.

4. The positive electrode material (100) of claim 3, wherein a mass fraction *a3* of the coating layer (130) in each of the plurality of positive electrode particles (110) satisfies: 1% ≤ *a3* ≤ 5%.

5. The positive electrode material (100) of claim 1, wherein the iron-based phosphate material further comprises a third active material, and a chemical formula of the third active material is NaFePO₄.

6. The positive electrode material (100) of claim 5, wherein a mass fraction *a4* of the third active material in the iron-based phosphate material satisfies: 0 *< a4* ≤ 2%.

7. A preparation method for the positive electrode material of any one of claims 1 to 6, comprising:
providing (S101) a sodium source, an iron source, a phosphorus source, and a carbon source, and obtaining a slurry by mixing the sodium source, the iron source, the phosphorus source, and the carbon source;
sand milling (S102) and spray drying the slurry to obtain first intermediate particles; and
performing (S103) staged sintering to obtain the positive electrode material; wherein the positive electrode material comprises a plurality of positive electrode particles, each of the plurality of positive electrode particles comprises a coating layer and a core, the core is made of the iron-based phosphate material, the coating layer is coated around a surface of the core, and wherein the carbon source is carbonized to form the coating layer, and the sodium source, the iron source, and the phosphorus source form the core made of the iron-based phosphate; and performing the staged sintering comprises:
performing (S1031) first staged sintering on the first intermediate particles at a first temperature to form second intermediate particles, wherein the carbon source is carbonized to form the coating layer, and the sodium source, the iron source, and the phosphorus source form the first active material; and
performing (S1032) second staged sintering on the second intermediate particles at a second temperature to form the positive electrode material, wherein the positive electrode material comprises the first active material and the second active material, the carbon source is further carbonized, and after the sodium source, the iron source, and the phosphorus source form the second intermediate particles, part of the second intermediate particles are further decomposed into the second active material at the second temperature, and the second temperature is higher than the first temperature.

8. The preparation method for the positive electrode material of claim 7, wherein the first temperature *T1* satisfies: 450 °C ≤ *T1* ≤ 550 °C; and the second temperature *T2* satisfies: 590 °C ≤ *T2* ≤ 650 °C.

9. The preparation method for the positive electrode material of claim 7, wherein the second intermediate particles are heated from the first temperature to the second temperature with a heating rate *T'* satisfying: 8 °C/min ≤ *T'* ≤ 12 °C/min.

10. The preparation method for the positive electrode material of claim 7, wherein a period during which the first staged sintering is performed on the first intermediate particles is *t1*, and *t1* satisfies: 6 h ≤ *t1* ≤ 15 h; and a period during which the second staged sintering is performed on the second intermediate particles is *t2,* and *t2* satisfies: 1 h ≤ *t2* ≤ 4 h.

11. The preparation method for the positive electrode material of claim 7, wherein a molar ratio α of a sodium element in the sodium source to an iron element in the iron source satisfies: 1.33 ≤ α ≤ 1.43; and a molar ratio *β* of the iron element in the iron source to a phosphorus element in the phosphorus source satisfies: 0.68 ≤ *β* ≤ 0. 75.

12. The preparation method for the positive electrode material of claim 7, wherein sand milling and spray drying the slurry to obtain the first intermediate particles comprises:
sand milling (S1021) the slurry to obtain a refined slurry, wherein the refined slurry comprises precursor particles, and a particle size *D* of each of the precursor particles satisfies: *D <* 900 nm; and
spray drying (S1022) the refined slurry to obtain the first intermediate particles.

13. A positive electrode (200), comprising:
a positive current collector (210); and
a positive electrode material layer (220), disposed on a surface of the positive current collector (210), wherein the positive electrode material layer (220) comprises the positive electrode material (100) of any one of claims 1 to 5, or the positive electrode material (100) prepared by the preparation method for the positive electrode material of any one of claims 7 to 12.

14. A battery (300), comprising:
an electrolytic solution (310);
a negative electrode (320), at least partially immersed in the electrolytic solution (310);
a separator (330), wherein the separator (330) is positioned at one side of the negative electrode (320), and is at least partially immersed in the electrolytic solution (310); and
the positive electrode (200) of claim 13, wherein the positive electrode (200) is disposed at one side of the separator (330) positioned facing away from the negative electrode (320), and is at least partially immersed in the electrolytic solution (310).
